# EUROPEAN PATENT SPECIFICATION

(11) **EP 4 438 165 B1**
(45) Date of publication and mention of the grant of the patent: **05.08.2026**
(21) Application number: 24158289.9
(22) Date of filing: 19.02.2024
(51) Int. Cl.: B01F 25/314, B01F 25/316, B29C 73/16

(54) **BOTTLE UNIT AND PUNCTURE REPAIR KIT**
FLASCHENEINHEIT UND PUNKTIONSREPARATURKIT
UNITÉ DE BOUTEILLE ET KIT DE RÉPARATION DE CREVAISON

(30) Priority: 27.03.2023 JP 2023050286
(43) Date of publication of application: 02.10.2024
(73) Proprietor: Sumitomo Rubber Industries, Ltd., Kobe-shi, Hyogo 651-0072 (JP)
(72) Inventor: TAKAGI, Keiji, Kobe-shi, 651-0072 (JP); KINOHIRA, Tomokazu, Kobe-shi, 651-0072 (JP)
(74) Representative: Manitz Finsterwald Patent- und Rechtsanwaltspartnerschaft mbB

(56) References cited:
- DE-A1- 102019 217 775
- JP-A- 2006 116 365
- JP-A- 2011 167 675
- JP-A- 2017 056 662
- US-A1- 2005 189 081

## Description

### BACKGROUND OF THE INVENTION

### Field of the Invention

The present invention relates to a bottle unit including a mixing device for mixing a puncture repair liquid and compressed air, and a puncture repair kit including the bottle unit.

### Background Art

Hitherto, a puncture repair kit for repairing a punctured tire has been known. For example, Japanese Laid-Open Patent Publication No. 2017-056662 proposes a puncture repair kit for repairing a punctured tire by sequentially injecting a puncture repair liquid and compressed air into the punctured tire using compressed air from a compressor.

However, the puncture repair kit of Japanese Laid-Open Patent Publication No. 2017-056662 tends to take a long time to close a punctured part with the puncture repair liquid, since the compressed air is injected after the puncture repair liquid is injected.

A bottle unit in accordance with the features of the preamble of claim 1 is known from JP 2011 167675 A.

The present invention has been made in view of the above circumstances, and a main object of the present invention is to provide a bottle unit, and a puncture repair kit for performing puncture repair in a short time.

### SUMMARY OF THE INVENTION

The present invention is directed to a bottle unit comprising a mixing device for mixing a puncture repair liquid and compressed air, a container containing the puncture repair liquid, wherein the container has an opening portion for containing the puncture repair liquid inside the container, and the mixing device is attached to the opening portion, and the mixing device including: a mixing chamber including a top surface located on an upper side when in use and a floor surface located on a lower side when in use; a first inlet for supplying the compressed air to the mixing chamber; a second inlet for supplying the puncture repair liquid to the mixing chamber; and an outlet for discharging a mixture of the puncture repair liquid and the compressed air from the mixing chamber, wherein the mixing chamber has a maximum section where a distance between the top surface and the floor surface is the largest, and a minimum section where the distance is the smallest.

As a result of having the above-described configuration, the mixing device of the present invention allows puncture repair to be performed in a short time.

According to an embodiment of the invention, the minimum section is formed by a protrusion portion which protrudes from at least one of the top surface and the floor surface toward an interior of the mixing chamber.

According to an embodiment of the invention, wherein the protrusion portion has a conical shape having a most protruding vertex.

According to an embodiment of the invention, the protrusion portion has a hemispherically protruding dome shape.

According to an embodiment of the invention, the protrusion portion has a truncated cone shape having a most protruding top portion.

According to an embodiment of the invention, the top portion has a recess which is recessed in a direction opposite to a protruding direction thereof.

According to an embodiment of the invention, the protrusion portion is provided at the top surface.

According to an embodiment of the invention, the protrusion portion is provided at the floor surface.

According to an embodiment of the invention, the protrusion portion is provided at each of the top surface and the floor surface.

According to an embodiment of the invention, in the mixing chamber, the distance between the top surface and the floor surface gradually decreases from the maximum section to the minimum section.

According to an embodiment of the invention, the minimum section is located between the first inlet and the outlet in a plan view of the mixing chamber.

According to an embodiment of the invention, the mixing chamber has a circular column shape in which the top surface and the floor surface are circular.

According to an embodiment of the invention, the minimum section is located on a center line of the mixing chamber.

A puncture repair kit includes the bottle unit according to the invention or any of its embodiments and a compressor for supplying the compressed air.

### BRIEF DESCRIPTION OF THE DRAWINGS

FIG. 1 is a cross-sectional view conceptually showing an embodiment of a puncture repair kit of the present invention;
FIG. 2 is a schematic diagram of a mixing chamber of the embodiment;
FIG. 3 is a schematic diagram of a mixing chamber of a second embodiment;
FIG. 4 is a schematic diagram of a mixing chamber of a third embodiment;
FIG. 5 is a schematic diagram of a mixing chamber of a fourth embodiment;
FIG. 6 is a schematic diagram of a mixing chamber of a fifth embodiment;
FIG. 7 is a schematic diagram of a mixing chamber of a sixth embodiment;
FIG. 8 is a schematic diagram of a mixing chamber of a seventh embodiment;
FIG. 9 is a schematic diagram of a mixing chamber of an eighth embodiment; and
FIG. 10 is a schematic diagram of a mixing chamber of a ninth embodiment.

### DETAILED DESCRIPTION

Hereinafter, an embodiment of the present invention will be described in detail with reference to the drawings.

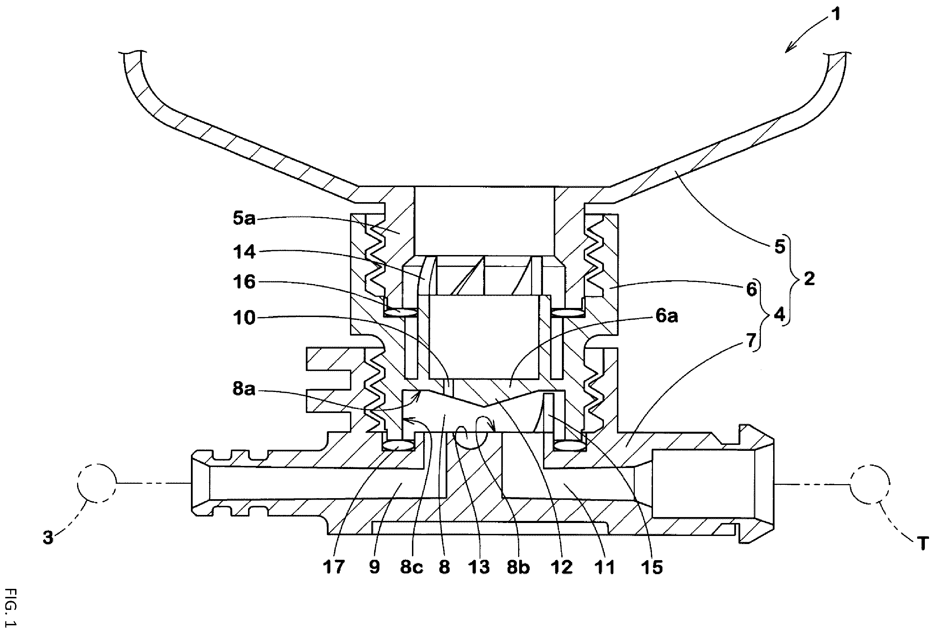

FIG. 1 is a cross-sectional view conceptually showing a puncture repair kit 1 of the present embodiment. As shown in FIG. 1, the puncture repair kit 1 is suitably used, for example, for filling an object T, such as a punctured tire, with a puncture repair liquid R and compressed air A. The puncture repair kit 1 of the present embodiment includes a bottle unit 2 and a compressor 3 for supplying the compressed air A to the bottle unit 2.

The bottle unit 2 of the present embodiment includes a mixing device 4 for mixing the puncture repair liquid R and the compressed air A, and a container 5 for containing the puncture repair liquid R. The mixing device 4 includes, for example, an adapter member 6 attached to the container 5, and a cap member 7 attached to the adapter member 6.

In such a bottle unit 2, it is easy to attach the mixing device 4 and the container 5 to each other, so that the bottle unit 2 serves to shorten the time required for puncture repair. In addition, the mixing device 4 can mix the puncture repair liquid R and the compressed air A in advance before filling the object T, thereby shortening the time required for puncture repair. The mixing device 4 is not limited to such a mode, and may be an integrally molded product in which the adapter member 6 and the cap member 7 are integrated.

The container 5 has an opening portion 5a for containing the puncture repair liquid R inside the container 5. The container 5 contains the puncture repair liquid R therein through the opening portion 5a. The opening portion 5a has, for example, a film (not shown) for holding the contained puncture repair liquid R in an airtight manner. The mixing device 4 is attached to the opening portion 5a of the container 5. Such a container 5 eliminates the need to form a separate outlet for the puncture repair liquid R and serves to reduce the production cost.

The mixing device 4 includes, for example, a mixing chamber 8 formed between the adapter member 6 and the cap member 7. The mixing chamber 8 includes a top surface 8a which is located on an upper side when in use, that is, when the mixing device 4 is attached to the container 5 and puncture repair is performed, and a floor surface 8b which is located on a lower side when in use. The mixing chamber 8 preferably includes a side surface 8c connecting the top surface 8a and the floor surface 8b. Such a mixing chamber 8 is suitable for ensuring a space for mixing the puncture repair liquid R and the compressed air A in advance.

The mixing chamber 8 has, for example, a circular column shape in which the top surface 8a and the floor surface 8b are circular. That is, the side surface 8c of the mixing chamber 8 preferably has a cylindrical shape. Such a mixing chamber 8 has no corners in the side surface 8c and is suitable for reducing the amount of residual matter in the mixing chamber 8.

The top surface 8a of the mixing chamber 8 is formed, for example, by a separation wall 6a of the adapter member 6. The floor surface 8b of the mixing chamber 8 is formed, for example, by the cap member 7. The side surface 8c of the mixing chamber 8 is formed, for example, by the adapter member 6. The side surface 8c of the mixing chamber 8 may be formed, for example, by the cap member 7. Such a mixing chamber 8 facilitates machining of the top surface 8a and the floor surface 8b and serves to reduce the production cost.

The mixing device 4 includes a first inlet 9 for supplying the compressed air A to the mixing chamber 8, and a second inlet 10 for supplying the puncture repair liquid R to the mixing chamber 8. In such a mixing device 4, the mixing chamber 8 can be repeatedly brought into a positive pressure state and a negative pressure state by pulsation of the compressed air A supplied from the compressor 3, thereby dripping the puncture repair liquid R from the second inlet 10 into the mixing chamber 8 to produce a mixture.

At least a part of the mixture is, for example, an aerosol of the puncture repair liquid R and the compressed air A. That is, the mixing chamber 8 of the present embodiment can aerosolize at least a part of the mixture. Such a mixture can be supplied with at least a part of the puncture repair liquid R as aerosol particles of about 1 to 100 µm. Accordingly, the puncture repair kit 1 allows a punctured part to be efficiently repaired with a small amount of the puncture repair liquid R, and even if the object T is a tire in which a sound absorbing material, a sensor, etc., are placed, the puncture repair kit 1 can reduce the influence on the sound absorbing material, the sensor, etc.

The puncture repair liquid R preferably contains at least glycol. Examples of glycol include ethylene glycol, 1,3-propanediol, and propylene glycol. Such a puncture repair liquid R is suitable for efficiently repairing a punctured part even when injected in a small amount as an aerosol into the object T such as a punctured tire.

The mixing device 4 includes an outlet 11 for discharging the mixture of the puncture repair liquid R and the compressed air A from the mixing chamber 8. Such a mixing device 4 allows the puncture repair liquid R and the compressed air A to smoothly flow thereinto and therefrom, and serves to shorten the time required for puncture repair.

The first inlet 9 and the outlet 11 are provided, for example, in the cap member 7. The first inlet 9 and the outlet 11 of the present embodiment are provided in the floor surface 8b. The second inlet 10 is provided, for example, in the separation wall 6a of the adapter member 6. The second inlet 10 of the present embodiment is provided in the top surface 8a.

Such a mixing device 4 discharges the mixture of the compressed air A and the puncture repair liquid R dripped from the second inlet 10 located on the upper side, through the outlet 11 located on the lower side, and thus can inhibit the dripped puncture repair liquid R from remaining therein, thereby efficiently producing the mixture.

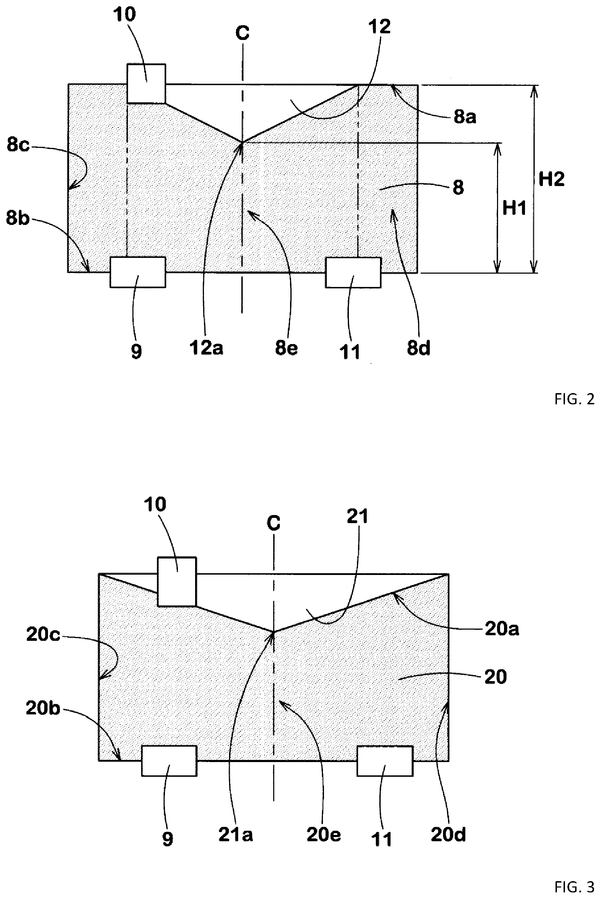

FIG. 2 is a conceptual diagram of the mixing chamber 8 of the present embodiment. For ease of understanding, the mixing chamber 8 is colored in FIG. 2, and the same applies to FIG. 3 and the subsequent drawings. As shown in FIG. 2, the mixing chamber 8 has a maximum section 8d where the distance between the top surface 8a and the floor surface 8b is the largest, and a minimum section 8e where this distance is the smallest.

Such a mixing chamber 8 can provide directivity to the flow therein and can efficiently discharge the mixture of the puncture repair liquid R and the compressed air A therefrom. As a result, even if the mixture is at least partially aerosolized, the mixing device 4 of the present embodiment can quickly discharge the mixture through the outlet 11, thereby suppressing aggregation of the mixture. Therefore, the mixing device 4 of the present embodiment allows puncture repair to be performed in a short time.

In a more preferable mode, in the mixing chamber 8, the distance between the top surface 8a and the floor surface 8b gradually decreases from the maximum section 8d to the minimum section 8e. Such a mixing chamber 8 has no portion where the distance between the top surface 8a and the floor surface 8b locally fluctuates, so that there is no risk of the mixture remaining in the fluctuating portion.

A first height H1 which is the distance between the top surface 8a and the floor surface 8b at the minimum section 8e is preferably not greater than 60% of a second height H2 which is the distance between the top surface 8a and the floor surface 8b at the maximum section 8d. When the first height H1 is not greater than 60% of the second height H2, the mixture can easily flow along the maximum section 8d, thereby providing directivity to the flow inside the mixing chamber 8. From such a viewpoint, the first height H1 is more preferably not greater than 50% of the second height H2 and further preferably not greater than 35% of the second height H2.

In a plan view of the mixing chamber 8, the minimum section 8e is preferably located between the first inlet 9 and the outlet 11. The minimum section 8e of the present embodiment is located on a straight line connecting the center of the first inlet 9 and the center of the outlet 11. Such a mixing chamber 8 can provide directivity to the flow of the compressed air A from the first inlet 9 to the outlet 11.

The minimum section 8e of the present embodiment is located on a center line C of the mixing chamber 8 having a circular column shape. Such a mixing chamber 8 can make the flow therein symmetrical, and serves to make the flow smooth and shorten the residence time of the mixture in the mixing chamber 8.

The minimum section 8e is formed by a protrusion portion 12 which protrudes from at least one of the top surface 8a and the floor surface 8b, in the present embodiment, from the top surface 8a, toward the interior of the mixing chamber 8. The protrusion portion 12 of the present embodiment is provided such that a part of the top surface 8a protrudes toward the interior of the mixing chamber 8. Accordingly, the mixing chamber 8 has the maximum section 8d in a certain range from a peripheral portion along the side surface 8c. Such a mixing chamber 8 can ensure a certain internal volume, and serves to produce a large amount of the mixture in a short time.

The volume of the protrusion portion 12 is preferably not less than 10% of the overall volume of the mixing chamber 8 including the protrusion portion 12. When the volume of the protrusion portion 12 is not less than 10% of the overall volume of the mixing chamber 8, the flow velocity inside the mixing chamber 8 can be increased, thereby shortening the residence time of the puncture repair liquid R in the mixing chamber 8. From such a viewpoint, the volume of the protrusion portion 12 is more preferably not less than 25% of the overall volume of the mixing chamber 8 and further preferably not less than 35% of the overall volume of the mixing chamber 8.

The protrusion portion 12 of the present embodiment has a conical shape having a most protruding vertex 12a. That is, the vertex 12a of the protrusion portion 12 forms the minimum section 8e. The vertex 12a of the protrusion portion 12 of the present embodiment is located on the center line C of the mixing chamber 8 having a circular column shape. Such a protrusion portion 12 facilitates machining of the top surface 8a, can make the internal flow symmetrical with a simple configuration, and serves to disperse the mixture and inhibit the mixture from remaining in the mixing chamber 8.

As shown in FIG. 1, the mixing chamber 8 may have, for example, a plurality of hemispherical recesses 13 formed on at least one of the top surface 8a, the floor surface 8b, and the side surface 8c. Such a plurality of hemispherical recesses 13 serve to make the flow smooth and shorten the residence time of the mixture in the mixing chamber 8.

The adapter member 6 has, for example, a breaking portion 14 which breaks the film (not shown) of the opening portion 5a when the adapter member 6 is attached to the opening portion 5a of the container 5. Such a breaking portion 14 can break the film of the opening portion 5a when the mixing device 4 is attached to the container 5, thereby allowing the puncture repair liquid R to be supplied to the mixing chamber 8.

The cap member 7 may be directly attached to the opening portion 5a of the container 5, for example, in an environment having a very low temperature at which it is difficult for the mixing device 4 to aerosolize at least a part of the mixture. The cap member 7 has a sub breaking portion 15 which breaks the film of the opening portion 5a when the cap member 7 is attached to the opening portion 5a of the container 5. The sub breaking portion 15 is provided, for example, near the opening of the outlet 11.

Such a sub breaking portion 15 can break the film of the opening portion 5a when the cap member 7 is directly attached to the container 5. In addition, the sub breaking portion 15 serves to reduce the flow path resistance in the mixing chamber 8 when the cap member 7 is attached to the adapter member 6 as the mixing device 4.

The adapter member 6 is screwed to both the opening portion 5a of the container 5 and the cap member 7, for example. The space between the adapter member 6 and the opening portion 5a is preferably sealed by a sealing member 16. The space between the adapter member 6 and the cap member 7 is sealed, for example, by a sub sealing member 17. Such an adapter member 6 is easily attached to the container 5 and to the cap member 7, and has excellent airtightness after being attached.

FIG. 3 is a schematic diagram of a mixing chamber 20 of a second embodiment. The same components as those in the above-described embodiment are designated by the same reference characters, and the description thereof is omitted. As shown in FIG. 3, the mixing chamber 20 of the second embodiment includes a top surface 20a which is located on an upper side when in use, a floor surface 20b which is located on a lower side when in use, and a side surface 20c connecting the top surface 20a and the floor surface 20b. Similar to the above-described mixing chamber 8, the mixing chamber 20 of the second embodiment has a circular column shape in which the top surface 20a and the floor surface 20b are circular, and the side surface 20c has a cylindrical shape.

As in the above-described mixing chamber 8, in the mixing chamber 20 of the second embodiment, the distance between the top surface 20a and the floor surface 20b gradually decreases from a maximum section 20d where this distance is the largest, to a minimum section 20e where this distance is the smallest. Similar to the above-described minimum section 8e, the minimum section 20e of the second embodiment is located on a center line C, of the mixing chamber 20 having a circular column shape, between the first inlet 9 and the outlet 11. Such a mixing chamber 20 can provide directivity to the flow of the compressed air A from the first inlet 9 to the outlet 11.

Similar to the above-described minimum section 8e, the minimum section 20e of the second embodiment is formed by a protrusion portion 21 which protrudes from the top surface 20a toward the interior of the mixing chamber 20. The protrusion portion 21 of the second embodiment is provided such that the entire top surface 20a protrudes toward the interior of the mixing chamber 20. Accordingly, the mixing chamber 20 has the maximum section 20d at a peripheral portion along the side surface 20c. Such a mixing chamber 20 can make the change of the internal volume thereof smooth, and serves to inhibit the mixture from remaining therein.

Similar to the above-described protrusion portion 12, the protrusion portion 21 of the second embodiment has a conical shape having a most protruding vertex 21a. The vertex 21a of the protrusion portion 21 of the second embodiment is located on the center line C of the mixing chamber 20 having a circular column shape. Such a protrusion portion 21 facilitates machining of the top surface 20a, can make the internal flow symmetrical with a simple configuration, and serves to disperse the mixture and inhibit the mixture from remaining therein.

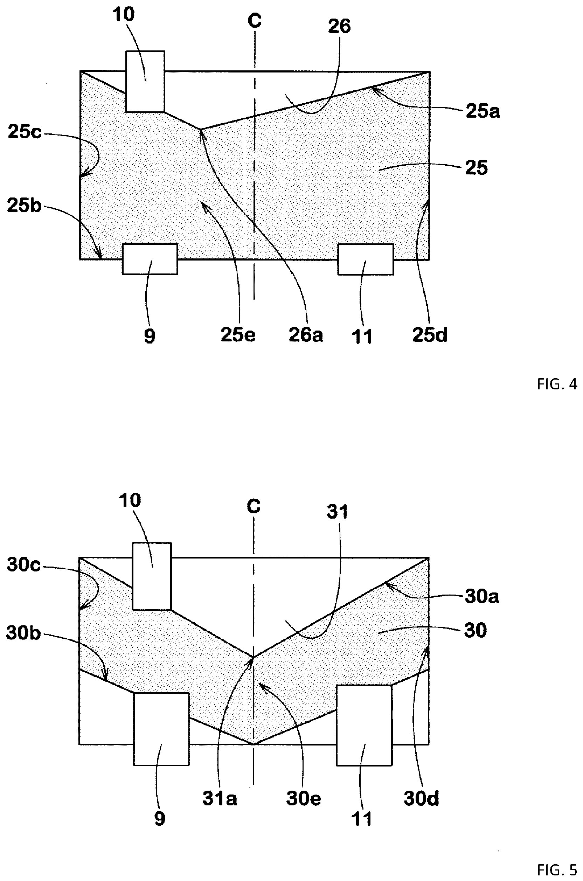

FIG. 4 is a schematic diagram of a mixing chamber 25 of a third embodiment. The same components as those in the above-described embodiments are designated by the same reference characters, and the description thereof is omitted. As shown in FIG. 4, the mixing chamber 25 of the third embodiment includes a top surface 25a which is located on an upper side when in use, a floor surface 25b which is located on a lower side when in use, and a side surface 25c connecting the top surface 25a and the floor surface 25b. Similar to the above-described mixing chamber 8, the mixing chamber 25 of the third embodiment has a circular column shape in which the top surface 25a and the floor surface 25b are circular, and the side surface 25c has a cylindrical shape.

As in the above-described mixing chamber 8, in the mixing chamber 25 of the third embodiment, the distance between the top surface 25a and the floor surface 25b gradually decreases from a maximum section 25d where this distance is the largest, to a minimum section 25e where this distance is the smallest. Similar to the above-described minimum section 8e, the minimum section 25e of the third embodiment is located on a straight line, connecting the center of the first inlet 9 and the center of the outlet 11, between the first inlet 9 and the outlet 11.

The minimum section 25e of the third embodiment is located on the first inlet 9 side with respect to a center line C of the mixing chamber 25 having a circular column shape. The position of the minimum section 25e is not limited to such a position, and can be set to any position according to the puncture repair liquid R to be dripped and the compressor 3. Such a mixing chamber 25 can be set to a shape that is optimum to make the flow smooth and shorten the residence time of the mixture in the mixing chamber 8.

Similar to the above-described minimum section 8e, the minimum section 25e of the third embodiment is formed by a protrusion portion 26 which protrudes from the top surface 25a toward the interior of the mixing chamber 25. Similar to the above-described protrusion portion 21, the protrusion portion 26 of the third embodiment is provided such that the entire top surface 25a protrudes toward the interior of the mixing chamber 25. Accordingly, the mixing chamber 25 has the maximum section 25d at a peripheral portion along the side surface 25c. Such a mixing chamber 25 serves to set the minimum section 25e at a position that is optimum to make the flow smooth.

The protrusion portion 26 of the third embodiment has an oblique conical shape having a most protruding vertex 26a. Here, the oblique cone shape is a type of conical shape in which the vertex 26a is not located on the center of a bottom surface. The vertex 26a of the protrusion portion 26 of the third embodiment is located at the minimum section 25e of the mixing chamber 25. Such a protrusion portion 26 facilitates machining of the top surface 25a, can make the internal flow symmetrical with a simple configuration, and serves to disperse the mixture and inhibit the mixture from remaining therein.

FIG. 5 is a schematic diagram of a mixing chamber 30 of a fourth embodiment. The same components as those in the above-described embodiments are designated by the same reference characters, and the description thereof is omitted. As shown in FIG. 5, the mixing chamber 30 of the fourth embodiment includes a top surface 30a which is located on an upper side when in use, a floor surface 30b which is located on a lower side when in use, and a side surface 30c connecting the top surface 30a and the floor surface 30b. Similar to the above-described mixing chamber 8, the mixing chamber 30 of the fourth embodiment has a circular column shape in which the top surface 30a and the floor surface 30b are circular, and the side surface 30c has a cylindrical shape.

As in the above-described mixing chamber 8, in the mixing chamber 30 of the fourth embodiment, the distance between the top surface 30a and the floor surface 30b gradually decreases from a maximum section 30d where this distance is the largest, to a minimum section 30e where this distance is the smallest. Similar to the above-described minimum section 8e, the minimum section 30e of the fourth embodiment is located on a center line C, of the mixing chamber 30 having a circular column shape, between the first inlet 9 and the outlet 11. Such a mixing chamber 30 can provide directivity to the flow of the compressed air A from the first inlet 9 to the outlet 11.

Similar to the above-described minimum section 8e, the minimum section 30e of the fourth embodiment is formed by a protrusion portion 31 which protrudes from the top surface 30a toward the interior of the mixing chamber 30. Similar to the above-described protrusion portion 21, the protrusion portion 31 of the fourth embodiment is provided such that the entire top surface 30a protrudes toward the interior of the mixing chamber 30.

The floor surface 30b of the fourth embodiment is recessed in the protruding direction of the protrusion portion 31. The minimum section 30e of the fourth embodiment is formed on the center line C of the mixing chamber 30 by making the inclination angle of the protrusion portion 31 and the inclination angle of the floor surface 30b different from each other. Accordingly, the mixing chamber 30 has the maximum section 30d at a peripheral portion along the side surface 30c. Such a mixing chamber 30 can control the directivity of the flow with both the top surface 30a and the floor surface 30b.

Similar to the above-described protrusion portion 21, the protrusion portion 31 of the fourth embodiment has a conical shape having a most protruding vertex 31a. The vertex 31a of the protrusion portion 31 of the fourth embodiment is located on the center line C of the mixing chamber 30 having a circular column shape. Such a protrusion portion 31 facilitates machining of the top surface 30a, can make the internal flow symmetrical with a simple configuration, and serves to disperse the mixture and inhibit the mixture from remaining therein.

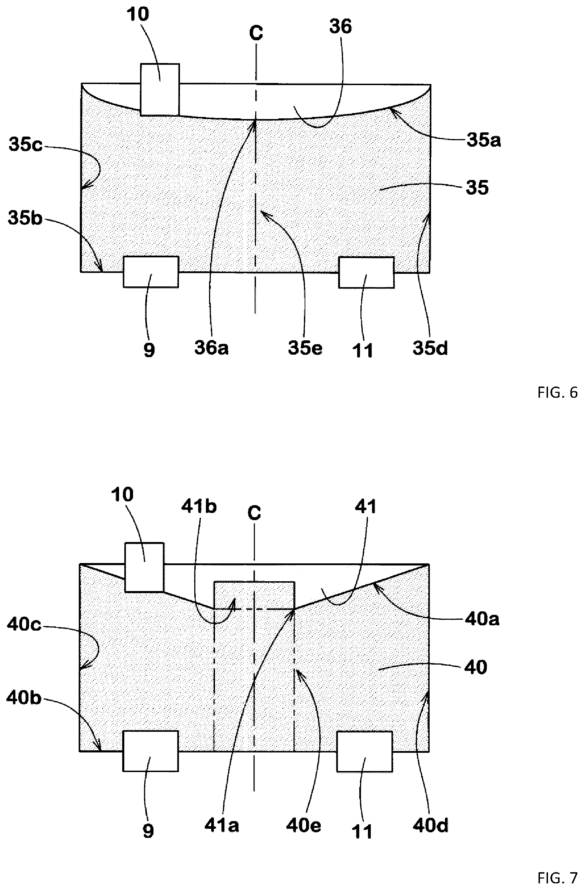

FIG. 6 is a schematic diagram of a mixing chamber 35 of a fifth embodiment. The same components as those in the above-described embodiments are designated by the same reference characters, and the description thereof is omitted. As shown in FIG. 6, the mixing chamber 35 of the fifth embodiment includes a top surface 35a which is located on an upper side when in use, a floor surface 35b which is located on a lower side when in use, and a side surface 35c connecting the top surface 35a and the floor surface 35b. Similar to the above-described mixing chamber 8, the mixing chamber 35 of the fifth embodiment has a circular column shape in which the top surface 35a and the floor surface 35b are circular, and the side surface 35c has a cylindrical shape.

As in the above-described mixing chamber 8, in the mixing chamber 35 of the fifth embodiment, the distance between the top surface 35a and the floor surface 35b gradually decreases from a maximum section 35d where this distance is the largest, to a minimum section 35e where this distance is the smallest. Similar to the above-described minimum section 8e, the minimum section 35e of the fifth embodiment is located on a center line C, of the mixing chamber 35 having a circular column shape, between the first inlet 9 and the outlet 11. Such a mixing chamber 35 can provide directivity to the flow of the compressed air A from the first inlet 9 to the outlet 11.

Similar to the above-described minimum section 8e, the minimum section 35e of the fifth embodiment is formed by a protrusion portion 36 which protrudes from the top surface 35a toward the interior of the mixing chamber 35. Similar to the above-described protrusion portion 21, the protrusion portion 36 of the fifth embodiment is provided such that the entire top surface 35a protrudes toward the interior of the mixing chamber 35. Accordingly, the mixing chamber 35 has the maximum section 35d at a peripheral portion along the side surface 35c. Such a mixing chamber 35 can make the change of the internal volume thereof smooth, and serves to inhibit the mixture from remaining therein.

The protrusion portion 36 of the fifth embodiment has a hemispherically protruding dome shape. A vertex 36a of the protrusion portion 36 of the fifth embodiment is located on the center line C of the mixing chamber 35 having a circular column shape. Such a protrusion portion 36 facilitates machining of the top surface 35a, can make the internal flow symmetrical with a simple configuration, and serves to disperse the mixture and inhibit the mixture from remaining therein.

FIG. 7 is a schematic diagram of a mixing chamber 40 of a sixth embodiment. The same components as those in the above-described embodiments are designated by the same reference characters, and the description thereof is omitted. As shown in FIG. 7, the mixing chamber 40 of the sixth embodiment includes a top surface 40a which is located on an upper side when in use, a floor surface 40b which is located on a lower side when in use, and a side surface 40c connecting the top surface 40a and the floor surface 40b. Similar to the above-described mixing chamber 8, the mixing chamber 40 of the sixth embodiment has a circular column shape in which the top surface 40a and the floor surface 40b are circular, and the side surface 40c has a cylindrical shape.

As in the above-described mixing chamber 8, in the mixing chamber 40 of the sixth embodiment, the distance between the top surface 40a and the floor surface 40b gradually decreases from a maximum section 40d where this distance is the largest, to a minimum section 40e where this distance is the smallest. Similar to the above-described minimum section 8e, the minimum section 40e of the sixth embodiment is located between the first inlet 9 and the outlet 11. Such a mixing chamber 40 can provide directivity to the flow of the compressed air A from the first inlet 9 to the outlet 11.

Similar to the above-described minimum section 8e, the minimum section 40e of the sixth embodiment is formed by a protrusion portion 41 which protrudes from the top surface 40a toward the interior of the mixing chamber 40. Similar to the above-described protrusion portion 21, the protrusion portion 41 of the sixth embodiment is provided such that the entire top surface 40a protrudes toward the interior of the mixing chamber 40. Accordingly, the mixing chamber 40 has the maximum section 40d at a peripheral portion along the side surface 40c. Such a mixing chamber 40 can make the change of the internal volume thereof smooth, and serves to inhibit the mixture from remaining therein.

The protrusion portion 41 of the sixth embodiment has a truncated cone shape having a most protruding top portion 41a. The top portion 41a of the protrusion portion 41 of the sixth embodiment has a circular shape having a center on a center line C of the mixing chamber 40 having a circular column shape. Such a protrusion portion 41 facilitates machining of the top surface 40a, can make the internal flow symmetrical with a simple configuration, and serves to disperse the mixture and inhibit the mixture from remaining therein.

The top portion 41a of the protrusion portion 41 of the sixth embodiment has a recess 41b which is recessed in a direction opposite to the protruding direction of the protrusion portion 41. Such a protrusion portion 41 can increase the internal volume of the mixing chamber 40, and serves to produce a large amount of the mixture in a short time.

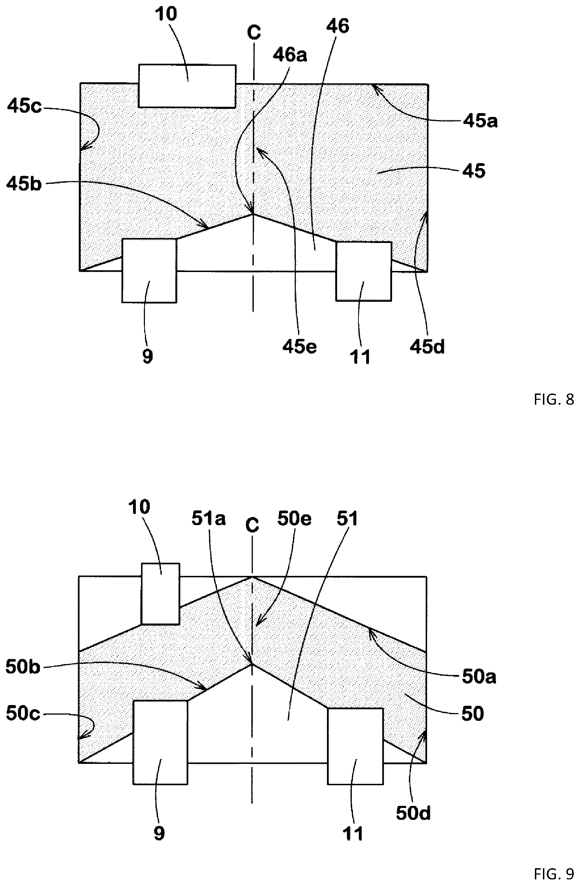

FIG. 8 is a schematic diagram of a mixing chamber 45 of a seventh embodiment. The same components as those in the above-described embodiments are designated by the same reference characters, and the description thereof is omitted. As shown in FIG. 8, the mixing chamber 45 of the seventh embodiment includes a top surface 45a which is located on an upper side when in use, a floor surface 45b which is located on a lower side when in use, and a side surface 45c connecting the top surface 45a and the floor surface 45b. Similar to the above-described mixing chamber 8, the mixing chamber 45 of the seventh embodiment has a circular column shape in which the top surface 45a and the floor surface 45b are circular, and the side surface 45c has a cylindrical shape.

As in the above-described mixing chamber 8, in the mixing chamber 45 of the seventh embodiment, the distance between the top surface 45a and the floor surface 45b gradually decreases from a maximum section 45d where this distance is the largest, to a minimum section 45e where this distance is the smallest. Similar to the above-described minimum section 8e, the minimum section 45e of the seventh embodiment is located on a center line C, of the mixing chamber 45 having a circular column shape, between the first inlet 9 and the outlet 11. Such a mixing chamber 45 can provide directivity to the flow of the compressed air A from the first inlet 9 to the outlet 11.

The minimum section 45e of the seventh embodiment is formed by a protrusion portion 46 which protrudes from the floor surface 45b toward the interior of the mixing chamber 45. The protrusion portion 46 of the seventh embodiment is provided such that the entire floor surface 45b protrudes toward the interior of the mixing chamber 45. Accordingly, the mixing chamber 45 has the maximum section 45d at a peripheral portion along the side surface 45c. Such a mixing chamber 45 can make the change of the internal volume thereof smooth, and serves to inhibit the mixture from remaining therein.

The protrusion portion 46 of the seventh embodiment has a conical shape having a most protruding vertex 46a. The vertex 46a of the protrusion portion 46 of the seventh embodiment is located on the center line C of the mixing chamber 45 having a circular column shape. Such a protrusion portion 46 facilitates machining of the floor surface 45b, can make the internal flow symmetrical with a simple configuration, and serves to disperse the mixture and inhibit the mixture from remaining therein.

FIG. 9 is a schematic diagram of a mixing chamber 50 of an eighth embodiment. The same components as those in the above-described embodiments are designated by the same reference characters, and the description thereof is omitted. As shown in FIG. 9, the mixing chamber 50 of the eighth embodiment includes a top surface 50a which is located on an upper side when in use, a floor surface 50b which is located on a lower side when in use, and a side surface 50c connecting the top surface 50a and the floor surface 50b. Similar to the above-described mixing chamber 8, the mixing chamber 50 of the eighth embodiment has a circular column shape in which the top surface 50a and the floor surface 50b are circular, and the side surface 50c has a cylindrical shape.

As in the above-described mixing chamber 8, in the mixing chamber 50 of the eighth embodiment, the distance between the top surface 50a and the floor surface 50b gradually decreases from a maximum section 50d where this distance is the largest, to a minimum section 50e where this distance is the smallest. Similar to the above-described minimum section 8e, the minimum section 50e of the eighth embodiment is located on a center line C, of the mixing chamber 50 having a circular column shape, between the first inlet 9 and the outlet 11. Such a mixing chamber 50 can provide directivity to the flow of the compressed air A from the first inlet 9 to the outlet 11.

Similar to the above-described minimum section 45e, the minimum section 50e of the eighth embodiment is formed by a protrusion portion 51 which protrudes from the floor surface 50b toward the interior of the mixing chamber 50. Similar to the above-described protrusion portion 46, the protrusion portion 51 of the eighth embodiment is provided such that the entire floor surface 50b protrudes toward the interior of the mixing chamber 50.

The top surface 50a of the eighth embodiment is recessed in the protruding direction of the protrusion portion 51. The minimum section 50e of the eighth embodiment is formed on the center line C of the mixing chamber 50 by making the inclination angle of the protrusion portion 51 and the inclination angle of the top surface 50a different from each other. Accordingly, the mixing chamber 50 has the maximum section 50d at a peripheral portion along the side surface 50c. Such a mixing chamber 50 can control the directivity of the flow with both the top surface 50a and the floor surface 50b.

Similar to the above-described protrusion portion 46, the protrusion portion 51 of the eighth embodiment has a conical shape having a most protruding vertex 51a. The vertex 51a of the protrusion portion 51 of the eighth embodiment is located on the center line C of the mixing chamber 50 having a circular column shape. Such a protrusion portion 51 facilitates machining of the floor surface 50b, can make the internal flow symmetrical with a simple configuration, and serves to disperse the mixture and inhibit the mixture from remaining therein.

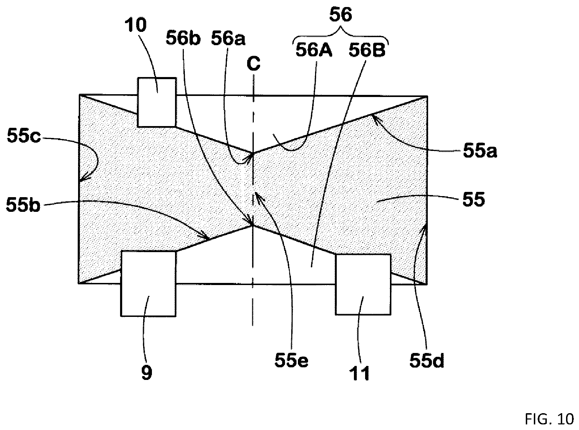

FIG. 10 is a schematic diagram of a mixing chamber 55 of a ninth embodiment. The same components as those in the above-described embodiments are designated by the same reference characters, and the description thereof is omitted. As shown in FIG. 10, the mixing chamber 55 of the ninth embodiment includes a top surface 55a which is located on an upper side when in use, a floor surface 55b which is located on a lower side when in use, and a side surface 55c connecting the top surface 55a and the floor surface 55b. Similar to the above-described mixing chamber 8, the mixing chamber 55 of the ninth embodiment has a circular column shape in which the top surface 55a and the floor surface 55b are circular, and the side surface 55c has a cylindrical shape.

As in the above-described mixing chamber 8, in the mixing chamber 55 of the ninth embodiment, the distance between the top surface 55a and the floor surface 55b gradually decreases from a maximum section 55d where this distance is the largest, to a minimum section 55e where this distance is the smallest. Similar to the above-described minimum section 8e, the minimum section 55e of the ninth embodiment is located on a center line C, of the mixing chamber 55 having a circular column shape, between the first inlet 9 and the outlet 11. Such a mixing chamber 55 can provide directivity to the flow of the compressed air A from the first inlet 9 to the outlet 11.

The minimum section 55e of the ninth embodiment is formed by a protrusion portion 56 which protrudes from the top surface 55a and the floor surface 55b toward the interior of the mixing chamber 55. The protrusion portion 56 of the ninth embodiment is provided such that both the entire top surface 55a and the entire floor surface 55b project toward the interior of the mixing chamber 55. Accordingly, the mixing chamber 55 has the maximum section 55d at a peripheral portion along the side surface 55c. Such a mixing chamber 55 can make the change of the internal volume thereof smooth, and serves to inhibit the mixture from remaining therein.

The protrusion portion 56 of the ninth embodiment includes a first protrusion portion 56A provided at the top surface 55a, and a second protrusion portion 56B provided at the floor surface 55b. Such a mixing chamber 55 can control the directivity of the flow with both the first protrusion portion 56A at the top surface 55a and the second protrusion portion 56B at the floor surface 55b.

The first protrusion portion 56A of the ninth embodiment has a conical shape having a most protruding vertex 56a. The second protrusion portion 56B of the ninth embodiment has a conical shape having a most protruding vertex 56b. Each of the vertex 56a of the first protrusion portion 56A and the vertex 56b of the second protrusion portion 56B of the ninth embodiment is located on the center line C of the mixing chamber 55 having a circular column shape. Such a protrusion portion 56 facilitates machining of the top surface 55a and the floor surface 55b, can make the internal flow symmetrical with a simple configuration, and serves to disperse the mixture and inhibit the mixture from remaining therein.

The first protrusion portion 56A and the second protrusion portion 56B of the protrusion portion 56 of the ninth embodiment have the same shape, but the protrusion portion 56 of the ninth embodiment is not limited to such a mode. The shape of the protrusion portion 56 may be, for example, a shape in which the heights of the first protrusion portion 56A and the second protrusion portion 56B are different from each other, or a shape in which the positions and shapes of the vertices 56A and 56B are different from each other.

Although the particularly preferred embodiments of the present invention have been described in detail above, the present invention is not limited to the above-described embodiments, and various modifications can be made to implement the present invention within the scope of the appended claims.

## Claims

1. A bottle unit (2) comprising a mixing device (4) for mixing a puncture repair liquid (R) and compressed air (A), the mixing device (4) comprising:
a mixing chamber (8, 20, 25, 30, 35, 40, 45, 50, 55) including a top surface (8a, 20a, 25a, 30a, 35a, 40a, 45a, 50a, 55a) located on an upper side when in use and a floor surface (8b, 20b, 25b, 30b, 35b, 40b, 45b, 50b, 55b) located on a lower side when in use;
a first inlet (9) for supplying the compressed air (A) to the mixing chamber (8, 20, 25, 30, 35, 40, 45, 50, 55);
a second inlet (10) for supplying the puncture repair liquid (R) to the mixing chamber (8, 20, 25, 30, 35, 40, 45, 50, 55); and
an outlet (11) for discharging a mixture of the puncture repair liquid (R) and the compressed air (A) from the mixing chamber (8, 20, 25, 30, 35, 40, 45, 50, 55), wherein
the mixing chamber (8, 20, 25, 30, 35, 40, 45, 50, 55) has a maximum section (8d, 20d, 25d, 30d, 35d, 40d, 45d, 50d, 55d) where a distance between the top surface (8a, 20a, 25a, 30a, 35a, 40a, 45a, 50a, 55a) and the floor surface (8b, 20b, 25b, 30b, 35b, 40b, 45b, 50b, 55b) is the largest, and a minimum section (8e, 20e, 25e, 30e, 35e, 40e, 45e, 50e, 55e) where the distance is the smallest,
**characterized in that**
the bottle unit (2) further comprises a container (5) containing the puncture repair liquid (R), wherein
the container (5) has an opening portion (5a) for containing the puncture repair liquid (R) inside the container (5), and
the mixing device (4) is attached to the opening portion (5a).

2. The bottle unit (2) according to claim 1, wherein the minimum section (8e, 20e, 25e, 30e, 35e, 40e, 45e, 50e, 55e) is formed by a protrusion portion(12, 21, 26, 31, 36, 41, 46, 51, 56) which protrudes from at least one of the top surface (8a, 20a, 25a, 30a, 35a, 40a, 45a, 50a, 55a) and the floor surface (8b, 20b, 25b, 30b, 35b, 40b, 45b, 50b, 55b) toward an interior of the mixing chamber (8, 20, 25, 30, 35, 40, 45, 50, 55).

3. The bottle unit (2) according to claim 2, wherein the protrusion portion (12, 21, 26, 31, 46, 51, 56) has a conical shape having a most protruding vertex (12a, 21a, 26a, 31a, 46a, 51a, 56a).

4. The bottle unit (2) according to claim 2, wherein the protrusion portion (36) has a hemispherically protruding dome shape.

5. The bottle unit (2) according to claim 2, wherein the protrusion portion (41) has a truncated cone shape having a most protruding top portion (41a).

6. The bottle unit (2) according to claim 5, wherein the top portion (41a) has a recess (41b) which is recessed in a direction opposite to a protruding direction thereof.

7. The bottle unit (2) according to any one of claims 2 to 6, wherein the protrusion portion (12, 21, 26, 31, 36, 41, 46, 51, 56) is provided at the top surface (8a, 20a, 25a, 30a, 35a, 40a, 45a, 50a, 55a).

8. The bottle unit (2) according to any one of claims 2 to 6, wherein the protrusion portion (46, 51, 56) is provided at the floor surface (45b, 50b, 55b).

9. The bottle unit (2) according to any one of claims 2 to 6, wherein the protrusion portion (12, 21, 26, 31, 36, 41, 46, 51, 56) is provided at each of the top surface (8a, 20a, 25a, 30a, 35a, 40a, 45a, 50a, 55a) and the floor surface (8b, 20b, 25b, 30b, 35b, 40b, 45b, 50b, 55b).

10. The bottle unit (2) according to any one of claims 1 to 9, wherein, in the mixing chamber (8, 20, 25, 30, 35, 40, 45, 50, 55), the distance between the top surface (8a, 20a, 25a, 30a, 35a, 40a, 45a, 50a, 55a) and the floor surface (8b, 20b, 25b, 30b, 35b, 40b, 45b, 50b, 55b) gradually decreases from the maximum section (8d, 20d, 25d, 30d, 35d, 40d, 45d, 50d, 55d) to the minimum section (8e, 20e, 25e, 30e, 35e, 40e, 45e, 50e, 55e).

11. The bottle unit (2) according to any one of claims 1 to 10, wherein the minimum section (8e, 20e, 25e, 30e, 35e, 40e, 45e, 50e, 55e) is located between the first inlet (9) and the outlet (11) in a plan view of the mixing chamber (8, 20, 25, 30, 35, 40, 45, 50, 55).

12. The bottle unit (2) according to any one of claims 1 to 11, wherein the mixing chamber (8, 20, 25, 30, 35, 40, 45, 50, 55) has a circular column shape in which the top surface (8a, 20a, 25a, 30a, 35a, 40a, 45a, 50a, 55a) and the floor surface (8b, 20b, 25b, 30b, 35b, 40b, 45b, 50b, 55b) are circular.

13. The bottle unit (2) according to claim 12, wherein the minimum section (8e, 20e, 30e, 35e, 40e, 45e, 50e, 55e) is located on a center line (C) of the mixing chamber (8, 20, 30, 35, 40, 45, 50, 55).

14. A puncture repair kit (1) comprising:
the bottle unit (2) according to any one of claims 1 to 13; and
a compressor (3) for supplying the compressed air (A).

## Patentansprüche

1. Flascheneinheit (2) mit einer Mischvorrichtung (4) zum Mischen einer Lochreparaturflüssigkeit (R) und Druckluft (A), wobei die Mischvorrichtung (4) umfasst:
eine Mischkammer (8, 20, 25, 30, 35, 40, 45, 50, 55) mit einer oberen Oberfläche (8a, 20a, 25a, 30a, 35a, 40a, 45a, 50a, 55a), die sich im Gebrauch auf einer Oberseite befindet, und einer Bodenfläche (8b, 20b, 25b, 30b, 35b, 40b, 45b, 50b, 55b), die sich im Gebrauch auf einer Unterseite befindet;
einen ersten Einlass (9) zum Zuführen der Druckluft (A) zu der Mischkammer (8, 20, 25, 30, 35, 40, 45, 50, 55);
einen zweiten Einlass (10) zum Zuführen der Lochreparaturflüssigkeit (R) zu der Mischkammer (8, 20, 25, 30, 35, 40, 45, 50, 55); und
einen Auslass (11) zum Austragen einer Mischung aus der Lochreparaturflüssigkeit (R) und der Druckluft (A) aus der Mischkammer (8, 20, 25, 30, 35, 40, 45, 50, 55), wobei
die Mischkammer (8, 20, 25, 30, 35, 40, 45, 50, 55) einen Maximalbereich (8d, 20d, 25d, 30d, 35d, 40d, 45d, 50d, 55d), bei dem ein Abstand zwischen der oberen Oberfläche (8a, 20a, 25a, 30a, 35a, 40a, 45a, 50a, 55a) und der Bodenfläche (8b, 20b, 25b, 30b, 35b, 40b, 45b, 50b, 55b) am größten ist, und einen Minimalbereich (8e, 20e, 25e, 30e, 35e, 40e, 45e, 50e, 55e), bei dem der Abstand am kleinsten ist, aufweist,
**dadurch gekennzeichnet, dass**
die Flascheneinheit (2) ferner einen Behälter (5) umfasst, der die Lochreparaturflüssigkeit (R) enthält, wobei
der Behälter (5) einen Öffnungsabschnitt (5a) zum Enthalten der Lochreparaturflüssigkeit (R) innerhalb des Behälters (5) aufweist, und
die Mischvorrichtung (4) an dem Öffnungsabschnitt (5a) angebracht ist.

2. Flascheneinheit (2) nach Anspruch 1, wobei der Minimalbereich (8e, 20e, 25e, 30e, 35e, 40e, 45e, 50e, 55e) durch einen Vorsprungabschnitt (12, 21, 26, 31, 36, 41, 46, 51, 56) gebildet ist, der von mindestens einer der oberen Oberfläche (8a, 20a, 25a, 30a, 35a, 40a, 45a, 50a, 55a) und der Bodenfläche (8b, 20b, 25b, 30b, 35b, 40b, 45b, 50b, 55b) zu einem Inneren der Mischkammer (8, 20, 25, 30, 35, 40, 45, 50, 55) hin vorsteht.

3. Flascheneinheit (2) nach Anspruch 2, wobei der Vorsprungabschnitt (12, 21, 26, 31, 46, 51, 56) eine konische Form mit einem am weitesten vorstehenden Scheitelpunkt (12a, 21a, 26a, 31a, 46a, 51a, 56a) aufweist.

4. Flascheneinheit (2) nach Anspruch 2, wobei der Vorsprungabschnitt (36) eine halbkugelförmig vorstehende Kuppelform aufweist.

5. Flascheneinheit (2) nach Anspruch 2, wobei der Vorsprungabschnitt (41) eine Kegelstumpfform mit einem am weitesten vorstehenden oberen Abschnitt (41a) aufweist.

6. Flascheneinheit (2) nach Anspruch 5, wobei der obere Abschnitt (41a) eine Aussparung (41b) aufweist, die in einer Richtung entgegengesetzt zu einer Vorsprungrichtung davon ausgespart ist.

7. Flascheneinheit (2) nach einem der Ansprüche 2 bis 6, wobei der Vorsprungabschnitt (12, 21, 26, 31, 36, 41, 46, 51, 56) an der oberen Oberfläche (8a, 20a, 25a, 30a, 35a, 40a, 45a, 50a, 55a) vorgesehen ist.

8. Flascheneinheit (2) nach einem der Ansprüche 2 bis 6, wobei der Vorsprungabschnitt (46, 51, 56) an der Bodenfläche (45b, 50b, 55b) vorgesehen ist.

9. Flascheneinheit (2) nach einem der Ansprüche 2 bis 6, wobei der Vorsprungabschnitt (12, 21, 26, 31, 36, 41, 46, 51, 56) jeweils an der oberen Oberfläche (8a, 20a, 25a, 30a, 35a, 40a, 45a, 50a, 55a) und der Bodenfläche (8b, 20b, 25b, 30b, 35b, 40b, 45b, 50b, 55b) vorgesehen ist.

10. Flascheneinheit (2) nach einem der Ansprüche 1 bis 9, wobei in der Mischkammer (8, 20, 25, 30, 35, 40, 45, 50, 55) der Abstand zwischen der oberen Oberfläche (8a, 20a, 25a, 30a, 35a, 40a, 45a, 50a, 55a) und der Bodenfläche (8b, 20b, 25b, 30b, 35b, 40b, 45b, 50b, 55b) von dem Maximalbereich (8d, 20d, 25d, 30d, 35d, 40d, 45d, 50d, 55d) zu dem Minimalbereich (8e, 20e, 25e, 30e, 35e, 40e, 45e, 50e, 55e) allmählich abnimmt.

11. Flascheneinheit (2) nach einem der Ansprüche 1 bis 10, wobei der Minimalbereich (8e, 20e, 25e, 30e, 35e, 40e, 45e, 50e, 55e) in einer Draufsicht auf die Mischkammer (8, 20, 25, 30, 35, 40, 45, 50, 55) zwischen dem ersten Einlass (9) und dem Auslass (11) angeordnet ist.

12. Flascheneinheit (2) nach einem der Ansprüche 1 bis 11, wobei die Mischkammer (8, 20, 25, 30, 35, 40, 45, 50, 55) eine Form einer kreisförmigen Säule aufweist, bei der die obere Oberfläche (8a, 20a, 25a, 30a, 35a, 40a, 45a, 50a, 55a) und die Bodenfläche (8b, 20b, 25b, 30b, 35b, 40b, 45b, 50b, 55b) kreisförmig sind.

13. Flascheneinheit (2) nach Anspruch 12, wobei der Minimalbereich (8e, 20e, 30e, 35e, 40e, 45e, 50e, 55e) auf einer Mittellinie (C) der Mischkammer (8, 20, 30, 35, 40, 45, 50, 55) angeordnet ist.

14. Lochreparaturkit (1), umfassend:
die Flascheneinheit (2) nach einem der Ansprüche 1 bis 13; und
einen Kompressor (3) zum Zuführen der Druckluft (A).

## Revendications

1. Unité de bouteille (2) comprenant un dispositif de mélange (4) pour mélanger un liquide de réparation de crevaison (R) et de l'air comprimé (A), le dispositif de mélange (4) comprenant :
une chambre de mélange (8, 20, 25, 30, 35, 40, 45, 50, 55) comprenant une surface supérieure (8a, 20a, 25a, 30a, 35a, 40a, 45a, 50a, 55a) située sur un côté supérieur lors de l'utilisation et une surface de fond (8b, 20b, 25b, 30b, 35b, 40b, 45b, 50b, 55b) située sur un côté inférieur lors de l'utilisation ;
une première entrée (9) pour fournir l'air comprimé (A) à la chambre de mélange (8, 20, 25, 30, 35, 40, 45, 50, 55) ;
une deuxième entrée (10) pour fournir le liquide de réparation de crevaison (R) à la chambre de mélange (8, 20, 25, 30, 35, 40, 45, 50, 55) ; et
une sortie (11) pour évacuer un mélange du liquide de réparation de crevaison (R) et de l'air comprimé (A) de la chambre de mélange (8, 20, 25, 30, 35, 40, 45, 50, 55), dans laquelle
la chambre de mélange (8, 20, 25, 30, 35, 40, 45, 50, 55) présente une section maximale (8d, 20d, 25d, 30d, 35d, 40d, 45d, 50d, 55d), où une distance entre la surface supérieure (8a, 20a, 25a, 30a, 35a, 40a, 45a, 50a, 55a) et la surface de fond (8b, 20b, 25b, 30b, 35b, 40b, 45b, 50b, 55b) est la plus grande, et une section minimale (8e, 20e, 25e, 30e, 35e, 40e, 45e, 50e, 55e), où la distance est la plus petite,
**caractérisée en ce que**
l'unité de bouteille (2) comprend en outre un récipient (5) contenant le liquide de réparation de crevaison (R), dans laquelle
le récipient (5) présente une partie d'ouverture (5a) pour contenir le liquide de réparation de crevaison (R) à l'intérieur du récipient (5), et
le dispositif de mélange (4) est fixé à la partie d'ouverture (5a).

2. Unité de bouteille (2) selon la revendication 1, dans laquelle la section minimale (8e, 20e, 25e, 30e, 35e, 40e, 45e, 50e, 55e) est formée par une partie en saillie (12, 21, 26, 31, 36, 41, 46, 51, 56) qui fait saillie depuis au moins l'une de la surface supérieure (8a, 20a, 25a, 30a, 35a, 40a, 45a, 50a, 55a) et de la surface de fond (8b, 20b, 25b, 30b, 35b, 40b, 45b, 50b, 55b) vers un intérieur de la chambre de mélange (8, 20, 25, 30, 35, 40, 45, 50, 55).

3. Unité de bouteille (2) selon la revendication 2, dans laquelle la partie en saillie (12, 21, 26, 31, 46, 51, 56) présente une forme conique ayant un sommet le plus saillant (12a, 21a, 26a, 31a, 46a, 51a, 56a).

4. Unité de bouteille (2) selon la revendication 2, dans laquelle la partie en saillie (36) présente une forme de dôme en saillie hémisphérique.

5. Unité de bouteille (2) selon la revendication 2, dans laquelle la partie en saillie (41) présente une forme de cône tronqué ayant une partie supérieure la plus saillante (41a).

6. Unité de bouteille (2) selon la revendication 5, dans laquelle la partie supérieure (41a) présente un évidement (41b) qui est évidé dans une direction opposée à une direction de saillie de celle-ci.

7. Unité de bouteille (2) selon l'une quelconque des revendications 2 à 6, dans laquelle la partie en saillie (12, 21, 26, 31, 36, 41, 46, 51, 56) est prévue au niveau de la surface supérieure (8a, 20a, 25a, 30a, 35a, 40a, 45a, 50a, 55a).

8. Unité de bouteille (2) selon l'une quelconque des revendications 2 à 6, dans laquelle la partie en saillie (46, 51, 56) est prévue au niveau de la surface de fond (45b, 50b, 55b).

9. Unité de bouteille (2) selon l'une quelconque des revendications 2 à 6, dans laquelle la partie en saillie (12, 21, 26, 31, 36, 41, 46, 51, 56) est prévue au niveau de chacune de la surface supérieure (8a, 20a, 25a, 30a, 35a, 40a, 45a, 50a, 55a) et de la surface de fond (8b, 20b, 25b, 30b, 35b, 40b, 45b, 50b, 55b).

10. Unité de bouteille (2) selon l'une quelconque des revendications 1 à 9, dans laquelle, dans la chambre de mélange (8, 20, 25, 30, 35, 40, 45, 50, 55), la distance entre la surface supérieure (8a, 20a, 25a, 30a, 35a, 40a, 45a, 50a, 55a) et la surface de fond (8b, 20b, 25b, 30b, 35b, 40b, 45b, 50b, 55b) diminue progressivement de la section maximale (8d, 20d, 25d, 30d, 35d, 40d, 45d, 50d, 55d) à la section minimale (8e, 20e, 25e, 30e, 35e, 40e, 45e, 50e, 55e).

11. Unité de bouteille (2) selon l'une quelconque des revendications 1 à 10, dans laquelle la section minimale (8e, 20e, 25e, 30e, 35e, 40e, 45e, 50e, 55e) est située entre la première entrée (9) et la sortie (11) dans une vue en plan de la chambre de mélange (8, 20, 25, 30, 35, 40, 45, 50, 55).

12. Unité de bouteille (2) selon l'une quelconque des revendications 1 à 11, dans laquelle la chambre de mélange (8, 20, 25, 30, 35, 40, 45, 50, 55) présente une forme de colonne circulaire dans laquelle la surface supérieure (8a, 20a, 25a, 30a, 35a, 40a, 45a, 50a, 55a) et la surface de fond (8b, 20b, 25b, 30b, 35b, 40b, 45b, 50b, 55b) sont circulaires.

13. Unité de bouteille (2) selon la revendication 12, dans laquelle la section minimale (8e, 20e, 30e, 35e, 40e, 45e, 50e, 55e) est située sur une ligne médiane (C) de la chambre de mélange (8, 20, 30, 35, 40, 45, 50, 55).

14. Kit de réparation de crevaison (1) comprenant :
l'unité de bouteille (2) selon l'une quelconque des revendications 1 à 13 ; et
un compresseur (3) pour fournir l'air comprimé (A).
